# EUROPEAN PATENT APPLICATION

(11) **EP 2 447 836 A1**
(43) Date of publication of application: **02.05.2012**
(21) Application number: 10187905.4
(22) Date of filing: 18.10.2010
(51) Int. Cl.: G06F 9/455, G06F 9/46, G06F 9/45, G06F 9/48, G06F 21/00, G06F 9/54

(54) **Multiple virtual machine engines on a single card**

(71) Applicant: Simulity Labs Ltd, Ffordd Penlan, Parc Menai Bangor Gwynedd LL57 4HJ (GB)
(72) Inventor: Bacca Nicolas, 92400 Courbevoie (FR); Mesnil Cédric, 78340 Les Clayes-sous-Bois (FR); Tomaz Oliver, 91310 Longpont-sur-Orge (FR)
(74) Representative: Richardt Patentanwälte

(57) **Abstract**

The invention relates to a method of interpreting an application (106; 204; 206) using a set of virtual machines (110; 112) on a smartcard (100), the method being performed by the smartcard (100) and comprising:
- receiving (114) a default, explicit or implicit selection of an application (106; 204; 206) to be run by the smartcard (100),
- selecting (118) a virtual machine from the set of virtual machines (110; 112), the selection being based on the type of application (106; 204; 206),
- interpreting the application (106; 204; 206) by said selected virtual machine.

## Description

### Field of the invention

The invention relates to a method of interpreting an application using a set of virtual machines on a smartcard, a computer program product, as well as a smartcard for interpreting an application using a set of virtual machines.

Smartcards, also called integrated circuit cards (ICC) are cards typically comprising a microprocessor and a memory. Smartcards cover a wide area of technical fields, including credit or ATM cards, mobile phone SIMs (subscriber identity modules), cryptographic smartcards and digital identification cards. Smartcards may either be contact smartcards or contactless smartcards.

A smartcard can run a virtual machine which is an imaginary computing machine which acts as an interpreter for application instructions, in the following denoted as bytecode. In contrast to a virtual machine, the smartcard's microprocessor executes so called native instructions, directly using its electronic hardware logic circuitry located in the microprocessor. Thus, the virtual machine is only a software implementation which is executed by the processor, which however does not execute its bytecode directly using the hardware electronic logic circuitry. The virtual machine rather converts the bytecode into hardware specific instructions using for example a 'last minute' batch translation process which is also known as a 'just in time' compilation, or through a real time interpretation process, known as interpretation. Throughout the context of this Patent Application, just in time compilation and interpretation are denoted by the same term 'interpretation' for the sake of simplicity.

Due to the translation or interpretation, applications executed by the virtual machine become platform independent such that applications may be executed by any virtual machine, independent of the underlying operating system using the native instructions of the microprocessor.

For example, DE 10 2005 056 357 A1 relates to a virtual machine to be executed multiple times in parallel on a smartcard. For the logical separation of applications it is possible to execute each application using its own virtual machine. The assignment of an application to a virtual machine may be for example based on different security levels of the application and the virtual machines.

The present invention provides a method of interpreting an application using a set of virtual machines on a smartcard, a computer program product and a smartcard for interpreting an application using a set of virtual machines, as described in the independent claims. Embodiments of the invention are given by the dependent claims.

In detail, the method is performed by the smartcard and comprises
- receiving an application to be run by a smartcard,
- selecting a virtual machine from the set of virtual machines, wherein the selection is based on the type of application, and interpreting the application by said selected virtual machines.

Embodiments of the present invention have the advantage that multiple applications even from multiple application providers may be run on a single smartcard, wherein automatically appropriate virtual machines for running the multiple applications are selected application specifically. Thus, instead of using an individual smartcard for every virtual machine instance, a multitude of virtual machine instances can be run on one single smartcard which drastically enhances the flexibility of usage of such cards.

In accordance with the invention, the smartcard is further adapted for executing a set of native instructions via a stub. Generally, a stub or 'native wrapper' is used to execute native instructions from a virtual application. A stub is a piece of native code which is called by a virtual code and requests calls parameters from the virtual machine and forge the native call to the requested native instructions. In an embodiment, the smartcard further comprises a unified native interface (UNI) for each virtual machine, wherein the method further comprises receiving a call of a native instruction of a set of native instructions from one of the virtual machines, selecting the unified native interface associated with said virtual machine providing the call, in response to said selection retrieving by said virtual machine at least one call parameter specified by the selected unified native interface for the called native instruction and providing said at least one call parameter and the call of the native instruction to the stub.

Thus, the problem is solved that typically call parameters are not stored the same way for different virtual machine interpreters, which therefore requires in the prior art to provide multiple native wrappers to process calls arguments for different interpreters. However, according to the present embodiment instead of providing multiple native wrappers (stubs), each virtual machine interpreter is forced to offer a standardized application programming interface to support parameters retrieval to code the stub only once. The stub will therefore use a list of functions which are redirected on the current running interpreter on call.

In a simplified manner, the UNI comprises a specification of a list of functions and their parameters. Depending on the virtual machine which performs the calls to the stub, the corresponding UNI implementation is selected to execute stub requests to the UNI. The UNI specifies the at least one call parameter required by the stub for the given call of a native instruction. Consequently, a single stub can be used such that stub coding has to be performed only once, wherein this stub is usable in a universal manner by any virtual machine implemented on the smartcard. In turn, each virtual machine has to provide its own UNI which permits determination of required call parameters for a given native call of a given virtual machine interpreter.

In accordance with an embodiment of the invention, the type of application is given by a bytecode format, wherein the virtual machines are adapted for interpreting different bytecode formats, wherein the selection is based on a bytecode format compatibility of the application and the virtual machines. Generally, the term 'bytecode format' denotes various forms of instruction sets designed for execution by virtual machines. Typically, bytecode formats are specific to respective virtual machines since the virtual machines must be able to execute the bytecodes. By performing a selection of a virtual machine based on a bytecode format of the application to be run on the virtual machine, the virtual machines of the smartcard can run a pool of applications, wherein it is ensured, that during an application process and depending on the application's bytecode, the appropriate virtual machine is triggered.

In accordance with a further embodiment of the invention, the application is assigned a security level and the virtual machines are also assigned individual security levels, wherein the type of application is given by the security level, wherein the selection is based on a security level compatibility of the application and the virtual machines.

Thus, virtual machines may be arranged by security context. Each virtual machine may be run with a predefined security enforcement policy, such that applications meeting the security policies can be run in a safe manner by the respective virtual machines. Preferably, applications requiring different security levels for data protection and application isolation are run by separate virtual machines. Further, this permits a data exchange between the different virtual machines of different security contexts in a predefined and controlled manner, which further enhances the flexibility of such a smartcard.

An example may be the implementation of a credit card application and an electronic ticketing application, which may be run by different virtual machines at different security levels. For example, the credit card application may run in a high security context, whereas the electronic ticketing application may run at a lower security context. Nevertheless, the electronic ticketing application run by one virtual machine may communicate with the credit card application run by a second virtual machine in order to request for example payment of respective ticketing fees.

In accordance with a further embodiment of the invention, the smartcard further comprises a set of logical channels for communication with an external terminal, wherein different types of applications are assigned to the logical channels, wherein receiving the application to be run by the smartcard comprises receiving a request of application interpretation on one of the logical channels, wherein the selection is based on the logical channel on which the request is received. Preferably, a global input and/or output registry is used with channel reservations for different applications.

In accordance with an embodiment of the invention, the stub is adapted to receive call parameters and calls of the native instructions from all virtual machines. In other words, only a single stub is used preferably for all virtual machines.

In accordance with a further embodiment of the invention, the smartcard comprises a UNI manager, wherein the manager is selecting the unified native interface associated with said virtual machine providing the call, requesting the at least one call parameter specified by the selected UNI for the called native instruction from the virtual machine and providing said at least one call parameter and the call of the native instruction to the stub.

In accordance with a further embodiment of the invention, the smartcard further comprises a global scheduler, the global scheduler switching between the virtual machines for quasi-parallel interpretation of threads of different applications. Generally, a virtual machine can be considered as being a native application to itself. Executing in parallel two native applications would require either an individual processor for each native application or a software mechanism to switch from one virtual machine (native application) to another virtual machine on a priority basis or on a computation time basis or even on a random basis. Here, the global scheduler is performing the switching between the virtual machines, preferably of a random basis. Consequently, by using a smartcard comprising only a single microprocessor multiple applications on multiple respective virtual machines can be executed in a quasi-parallel manner. Here, the term 'quasi-parallel' is understood as an execution of multiple applications sequentially in time, however appearing as being executed in parallel to a smartcard user.

In accordance with a further embodiment of the invention, the virtual machines of the set of virtual machines comprise associated local schedulers, each local scheduler switching between different threads of at least one application for quasi-parallel interpretation of threads by the virtual machine associated with said local scheduler. Thus, multiple quasi-parallel virtual threads inside a virtual machine interpreter are supported.

Generally, schedulers may either provide complete green threading or real time threading. Green threads are threads which do not require any hardware support and can be switched by software code only. The virtual machine threads of the local scheduler are examples of green threads, since only the virtual machines know of their existence. On the contrary, real time threads require support from the hardware as they are constrained by time measurements, i.e. a thread for a given application has to check for an external event every millisecond, for example. The virtual machine threads of the global scheduler are examples of green threads and/or real time threads. However, according to the present invention, the virtual machine threads and the native threads can both be either green threads or real time threads or a combination thereof.

In accordance with a further embodiment of the invention, the method further comprises a communication between the virtual machines of the set of virtual machines. As mentioned above, the communication may be limited with respect to security requirements of the different virtual machines.

In accordance with a further embodiment of the invention, the communication comprises sharing resources between the virtual machines of the set of virtual machines. This has the advantage, that the performance of the chip card is increased since even though multiple virtual machines are run in parallel, memory requirements can be limited by the resources sharing.

In accordance with a further embodiment of the invention, the communication comprises performing inter-virtual machines method calls. This further has the advantage, that different virtual machines may be developed for special purposes and tasks such that depending on the individual requirements of capabilities of a smartcard the individual virtual machines may be mixed in a desired manner. For example, virtual machines may be provided as modules to a smartcard to successively upgrade the smartcards with new capabilities. A main piece of software may be executable by a main virtual machine, whereas further modules comprising further virtual machines are optional, wherein the main virtual machine may communicate with the additional modules by means of performing the inter-virtual machine method calls.

In accordance with a further embodiment of the invention, the communication may comprise performing inter-virtual machine thread synchronization. Again referring to the above illustrated example of using upgradeable modules of virtual machines for a smartcard, this ensures that parallel thread execution can be provided even though the individual threads appear to be independent to the global scheduler. Thus, upgrading of a main virtual machine with additional modules of virtual machines becomes highly flexible.

In accordance with a further embodiment of the invention, the smartcard further comprises a global input and/or output registry for the virtual machines. Thus, a single interface is provided which facilitates communication of the smartcard with an external terminal. As mentioned above, for this purpose different types of applications may be assigned to different logical channels, wherein the logical channels are part of the global input/output registry.

In another aspect, the invention relates to a computer program product comprising computer executable instructions to perform the method as described above.

In another aspect, the invention relates to a smartcard for interpreting an application using a set of virtual machines, the smartcard comprising means for receiving an application to be run by the smartcard and means for selecting a virtual machine from the set of virtual machines, the selection being based on the type of application, wherein the selected virtual machine is adapted for interpreting the application. Further the smartcard is adapted for executing a set of native instructions via a stub, the stub being adapted for requesting call parameters for calls of the native instructions, wherein the smartcard further comprises a unified native interface for each virtual machine, wherein the smartcard further comprises means for receiving a call of a native instruction of the set of native instructions from one of the virtual machines, means for selecting the unified native interface associated with said virtual machine providing the call, means for in response to said selection retrieving by said virtual machine at least one call parameter specified by the selected unified native interface for the called native instruction and means for providing said at least one call parameter and the call of the native instruction to the stub.

In the following, preferred embodiments of the invention are described in greater detail by way of example only. Thus, the following drawings are designed for the purpose of illustration only and not as a definition of the limits of the invention. In the drawings:
- Figure 1: is a block diagram illustrating the general principles of the invention,
- Figure 2: illustrates various applications running on different virtual machines for security isolation,
- Figure 3: depicts a certification process which may be implemented using the above described smartcard,
- Figure 4: illustrates a unified native interface.

### Detailed description

In the following, similar elements are denoted by the same reference numerals.

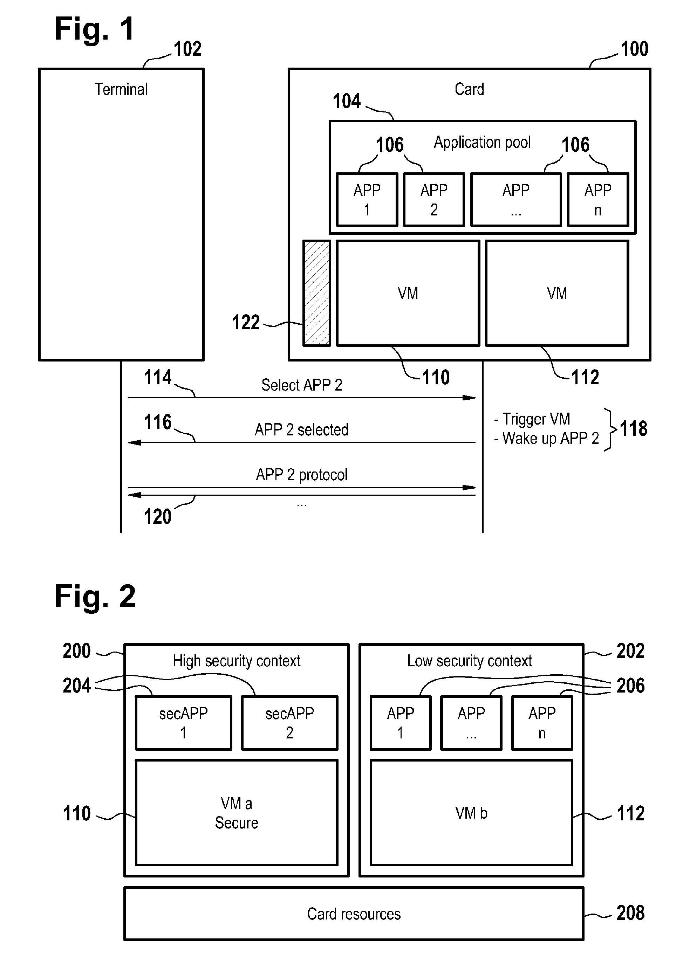

With respect to Fig. 1, a block diagram of the general principle of virtual machines which are implemented on a smartcard are shown. The smartcard 100 comprises an application pool 104 which comprises various applications 106. In the embodiment shown in Fig. 1, the application pool comprises a number of n applications.

The smartcard 100 may communicate with an external terminal 102 over an interface 122, wherein the communication may either be contact based or contactless.

In a step denoted by reference numeral 114, the terminal 102 selects a certain application. For example, application 2 of the applications 106 may be selected. Thereupon, in step 118 said application selection is received by the interface 122, which triggers the selection of a virtual machine 110 or 112 from a set of virtual machines comprised on the smartcard 100. The selection is based on a type of application which may for example be given by a certain bytecode format of the selected application or a security level of the application.

Further, the smartcard may comprise a set of logical channels for communication with the external terminal 102, wherein the different types of applications are assigned to the logical channels, wherein receiving the selection of the application to be run by the smartcard comprises receiving a request of application interpretation on one of the logical channels.

In summary, based on the application selection in step 114 an appropriate virtual machine may be triggered. In the present embodiment, triggering is performed using the bytecode format of the application 2 (APP2). The smartcard 100 checks for a bytecode format compatibility of the application APP2 and the virtual machines 110 and 112. This results in a triggering of the virtual machine 112 and a 'wake up' of application APP2 of the set of applications 106 in the application pool 104.

In step 116, the smartcard reports to the terminal 102 the successful selection of the requested application, which is followed in step 120 by the usage of a certain communication protocol for data exchange between the terminal 102 and the application APP2. The application APP2 is run on the virtual machine 112.

In Fig. 1 the scenario was discussed that a virtual machine selection is based on a given bytecode format of the application to be interpreted.

In a further embodiment, instead of triggering virtual machines on bytecode formats, the selection of appropriate virtual machines for interpreting a received application can be also additionally or alternatively based on a security level compatibility of the application and the virtual machines. This is depicted in detail in Fig. 2.

Fig. 2 illustrates an embodiment in which applications may be running on different virtual machines for the purpose of security isolation. Again, two virtual machines 110 and 112 are shown, wherein the virtual machines are arranged by security context. For example the virtual machine 110 has assigned a security enforcement policy at high level, wherein the virtual machine 112 only provides a low security context. In a practical example, applications 204 may be assigned to a high security level compatible to the security level of the virtual machine 110, whereas applications 206 may be assigned to a low security level compatible to the security level of the virtual machine 112.

For example, the security applications 204 are credit card applications, cryptographic applications or applications related to the personal identity of a user of the smartcard 100. In contrast, the applications 206 may be applications of lower security like currency conversion tools, electronic calculator tools, electronic games or office tools. Further, applications 206 of low security context may comprise applications which only every once in a while require the usage of high security context application tools like payment methods in order to be activated or reactivated. One example may be a 'credit card application' 204 and a 'parking ticket application' 206, wherein the terminal 102 may communicate with both applications to perform a parking ticket buying action. Here, only the credit card transaction has to be performed in the secure virtual machine context 200, whereas the general parking ticket application can be performed in the low security context 202.

As further shown in Fig. 2, card resources 208 like the memory of the smartcard 100, its microprocessor and the interface 122 may be used in common by the virtual machines 110 and 112.

It has to be noted that depending on the security context, the virtual machines 112 and 110 may either interpret applications 206 and 204, respectively completely independently from each other with complete isolation, which provides data protection at highest security level, or alternatively, a certain communication between the virtual machines 110 and 112 may be allowed, which however regarding the high security context 200 is only limited to certain explicitly defined types of information which is permitted to be exchanged between the high security context 200 and the low security context 202.

Generally, the same virtual machine and/or the same application can run at different security levels. Throughout the description, the term 'security level' is understood as any process used to monitor the execution environment of the application and/or any measure that could be taken to counteract any form of external attack. The security level may for example be the result of choice of the used virtual machine, of the application maintainer or of the card issuer.

The selection of a security level may depend on various criteria. For example, during its installation an application may be associated with a specific default security level. Then this level can be increased or decreased depending on the context in which the selection is done. The logical selection channel vs. security level criteria may be seen as a matrix: for example if the user is authenticated when selecting the application, the security environment requirements can be decreased, assuming the global environment is more secure. If the selection is done without any special procedure, the default security level may be applied. Finally a specific selection comprising for example a desired secure channel may increase the security level required for the execution.

Therefore, due to this selection mechanism, the same application may be run at different security levels and may even be run twice at the same time at different security levels.

It has to be noted, that another motivation to run the same application at different security level may be improving the performance, since a lower security level is typically associated with higher performances.

Even though in Figs. 1 and 2 the two embodiments of selecting a virtual machine based on a bytecode format and on a security level are shown separately, these two approaches may be combined in any desired manner. For example, the high security context 200 may comprise multiple virtual machines, wherein each of the multiple virtual machines in the high security context 200 is compatible for the interpretation of applications comprising a certain bytecode format.

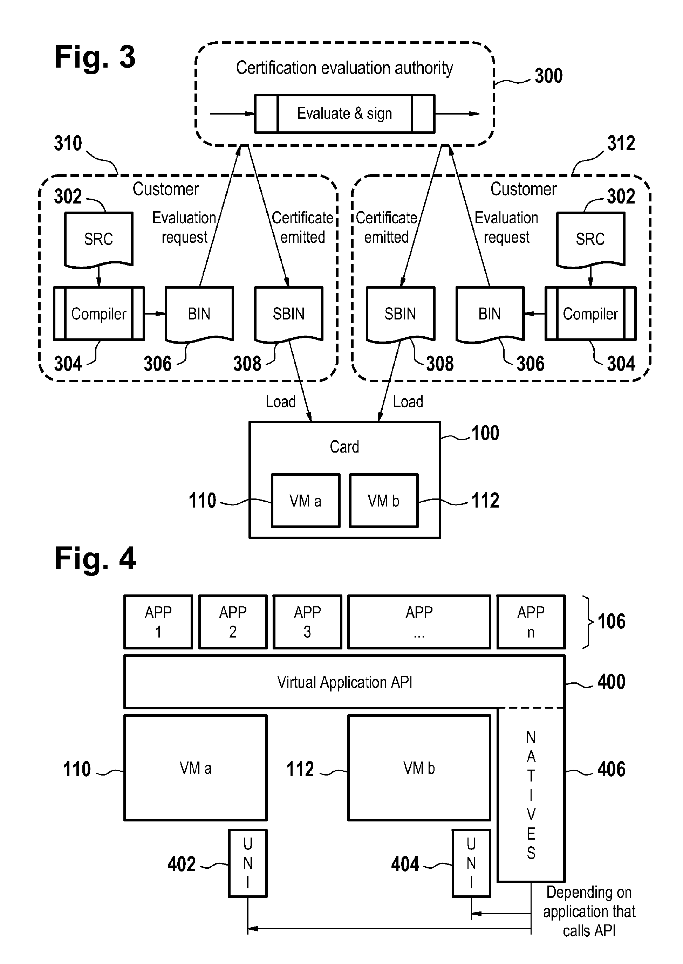

Fig. 3 is a schematic illustrating a certification process use case. The concept of multiple virtual machines 110 and 112 on a smartcard 100 of Fig. 1 may be used for example to simplify the certification process for customers when switching a smartcard provider or to extend the interoperability of a given smartcard 100 with respect to multiple users of the smartcard.

For example, a first customer 310 may obtain a source file 302, wherein a source file is any human readable file of a customer's application. By means of the compiler 304, the source file 302 may be compiled in such a manner that the compiled file (the binary file 306) is interpretable by a respective virtual machine of the smartcard 100. An example of a compiler 304 may be a Java compiler or a Microsoft .NET compiler.

In order to be sure that the security of the compiled binary file is well managed and that the file is from a trusted source, a certification evaluation authority 300 may then be contacted and requested to check and sign the binary file 306. For example, a digital signature of both source and binary files 302 and 306 may be used to ensure that no modifications of the certification issuance can be performed to the file - such a modification would be immediately apparent as a violation of said digital signature.

After the certification and evaluation authority 300 emitted a certificate, this results in a signed binary file 308. Then, the customer 310 may load this signed binary 308 to his smartcard 100. In the embodiment shown in Fig. 3, the virtual machine 110 of the smartcard 100 is adapted to interpret said signed binary file 308.

In case a second customer 312 also wants to use the smartcard 100, due to the inventive idea of using multiple virtual machines in parallel on a smartcard 100 said second customer is not forced to use the same compiler 304 as the customer 310 in order to run his applications on the smartcard 100. Instead, the customer 312 uses his own selected source file 302, compiles this source file with his own selected compiler 304 which results in a binary file 306, executable by a virtual machine 112 of the smartcard 100. Thus, the compiled application 306 may be interpreted by the virtual machine 112 completely independent of the presence of the virtual machine 110.

As described above with respect to customer 310, the same procedure with emitting a certificate for the compiled binary file for customer 312 may be performed using the certification evaluation authority 300.

Consequently, a certification process of applications for multiple customers can be drastically simplified when using a common smartcard.

One practical example for the necessity of such an easier certification process use case may for example be the usage of a smartcard as SIM (subscriber identity module) card of a mobile phone. Within a family, two family members may share a mobile phone comprising one single SIM card running the multiple virtual machines. Consequently, one SIM card can be used by two users even in case these two users are subscribers of two completely different mobile network providers. Such network providers typically have different certification evaluation authorities which normally require the usage of two separate SIM cards for different persons and their applications. However, as described with respect to embodiment Fig. 3, by using multiple virtual machines 110 and 112 implemented on a single smartcard 100, it is sufficient to use a single smartcard for multiple users.

Fig. 4 depicts a UNI 'unified native interface'. The reason for the implementation of additional UNIs 402 and 404 assigned to respective virtual machines 110 and 112 is the following: in various scenarios, applications 106 interpreted in the virtual machines 110 and 112 may require the execution of native instructions 406 from within said virtual applications. Such native instructions may for example comprise cryptographic operations.

To make this execution process possible, a 'stub' or 'native wrapper' is coded. A stub is a piece of native code which is called by virtual code, wherein the called stub requests call parameters from the virtual machine and forge the native call to the requested native instructions, i.e. the cryptographic application programming interface in the above example. However, as described above, typically call parameters are not stored the same way for two different virtual machine interpreters. This normally requires the usage of an individual native wrapper for each virtual machine interpreter. As a consequence, multiple native wrappers have to be coded which is an expensive process and requires large amounts of memory on the smartcard.

The UNIs 402 and 404 solve this problem by specifying a list of called native instructions and associated required parameters. In other words, the UNI requires each virtual machine 110 and 112 to offer a standardized virtual application programming interface 400 to support a parameters retrieval from the virtual machines 110 and 112 to code the wrapper only once. The native wrapper thus only has to access a limited list of predefined callable native instructions which are redirected on the current running interpreter on call.

In a practical example, in case in Fig. 4 the virtual machine 110 calls a native instruction of the natives 406, this call is directed to the UNI 402 which in turn requests at least one specific call parameter specified for the called native instruction from the respective application run by the virtual machine 110. The such requested at least one call parameter is then provided to the stub which forges the native call to the requested native instructions including the respective call parameters provided by the virtual machine 110.

Preferably, a global manager may be used for controlling the communication between the different virtual machines, UNIs, the wrapper and the natives.

Thus, a virtual application programming interface 400 is implemented by each virtual machine and a selection of a respective UNI is made by the card UNI manager during a call from a native wrapper and depending on the currently running virtual machine. Thread calling the native wrapper runs over a particular virtual machine, which de facto selects the UNI to be used.

### List of Reference Numerals

| | |
|---|---|
| 100 | Smartcard |
| 102 | Terminal |
| 104 | Application pool |
| 106 | Application |
| 110 | Virtual machine |
| 112 | Virtual machine |
| 114 | Application selection |
| 116 | Response |
| 118 | Virtual machine triggering |
| 120 | Application protocol |
| 200 | High security context |
| 202 | Low security context |
| 204 | Application |
| 206 | Application |
| 208 | Card resources |
| 300 | Certification evaluation authority |
| 302 | Source |
| 304 | Compiler |
| 306 | Binary |
| 308 | Signed binary |
| 310 | Customer |
| 312 | Customer |
| 400 | Virtual application API |
| 402 | UNI |
| 404 | UNI |
| 406 | Natives |

## Claims

1. A method of interpreting an application (106; 204; 206) using a set of virtual machines (110; 112) on a smartcard (100), the method being performed by the smartcard (100) and comprising:
- receiving (114) a default, explicit or implicit selection of an application (106; 204; 206) to be run by the smartcard (100),
- selecting (118) a virtual machine from the set of virtual machines (110; 112), the selection being based on the type of application (106; 204; 206),
- interpreting the application (106; 204; 206) by said selected virtual machine,
wherein the smartcard (100) is adapted for executing a set of native instructions (406) via a stub, the stub being adapted for requesting call parameters for calls of the native instructions, wherein the smartcard (100) further comprises a unified native interface for each virtual machine, wherein the method further comprises:
- receiving a call of a native instruction of the set of native instructions from one of the virtual machines (110; 112),
- selecting the unified native interface (402; 404) associated with said virtual machine providing the call,
- in response to said selection retrieving by said virtual machine at least one call parameter specified by the selected unified native interface (402; 404) for the called native instruction,
- providing said at least one call parameter and the call of the native instruction to the stub.

2. The method of claim 1, wherein the type of application (106; 204; 206) is given by a bytecode format, wherein the virtual machines (110; 112) are adapted for interpreting different bytecode formats, wherein the selection is based on a bytecode format compatibility of the application (106; 204; 206) and the virtual machines (110; 112).

3. The method of claim 1 or 2, wherein the application (106; 204; 206) is assigned a security level (200; 202) and the virtual machines (110; 112) are assigned to individual security levels (200; 202), wherein the type of application (106; 204; 206) is given by the security level, wherein the selection is based on a security level compatibility of the application (106; 204; 206) and the virtual machines (110; 112).

4. The method of claim 1, wherein the smartcard (100) further comprises a set of logical channels for communication with an external terminal, wherein different types of applications (106; 204; 206) are assigned to the logical channels, wherein receiving the application (106; 204; 206) to be run by the smartcard (100) comprises receiving a request of application (106; 204; 206) interpretation on one of the logical channels, wherein the selection is based on the logical channel on which the request is received.

5. The method of claim 1, wherein the stub is adapted to receive call parameters and calls of the native instructions from all virtual machines (110; 112).

6. The method of claim 5, wherein the smartcard (100) comprises a unified native interface manager, the manager
- selecting the unified native interface (402; 404) associated with said virtual machine providing the call,
- requesting the at least one call parameter specified by the selected unified native interface (402; 404) for the called native instruction from the virtual machine and
- providing said at least one call parameter and the call of the native instruction to the stub.

7. The method of claim 1, wherein the smartcard (100) further comprises a global scheduler, the global scheduler switching between the virtual machines (110; 112) for quasi parallel interpretation of threads of different applications (106; 204; 206).

8. The method of claim 1, wherein virtual machines (110; 112) of the set of virtual machines (110; 112) comprise associated local schedulers, each local scheduler switching between different threads of at least one application (106; 204; 206) for quasi parallel interpretation of threads by the virtual machine associated with said local scheduler.

9. The method of claim 1, further comprising communication between the virtual machines (110; 112) of the set of virtual machines (110; 112).

10. The method of claim 9, wherein the communication comprises sharing resources between the virtual machines (110; 112) of the set of virtual machines (110; 112).

11. The method of claim 10, wherein the communication comprises performing inter-virtual machine method calls.

12. The method of claim 10, wherein the communication comprises performing inter-virtual machine thread synchronization.

13. The method of claim 1, wherein the smartcard (100) further comprises a global input/output registry for the virtual machines (110; 112).

14. A computer program product comprising computer executable instructions to perform the method steps as claimed in the previous claims.

15. A smartcard (100) for interpreting an application (106; 204; 206) using a set of virtual machines (110; 112), the smartcard (100) comprising:
- means for receiving a default, explicit or implicit selection of an application (106; 204; 206) to be run by the smartcard (100),
- means for selecting a virtual machine from the set of virtual machines (110; 112), the selection being based on the type of application (106; 204; 206), wherein the selected virtual machine is adapted for interpreting the application (106; 204; 206),
wherein the smartcard (100) is adapted for executing a set of native instructions (406) via a stub, the stub being adapted for requesting call parameters for calls of the native instructions, wherein the smartcard (100) further comprises a unified native interface for each virtual machine, wherein the smartcard further comprises:
- means for receiving a call of a native instruction of the set of native instructions from one of the virtual machines (110; 112),
- means for selecting the unified native interface (402; 404) associated with said virtual machine providing the call,
- means for in response to said selection retrieving by said virtual machine at least one call parameter specified by the selected unified native interface (402; 404) for the called native instruction,
- means for providing said at least one call parameter and the call of the native instruction to the stub.
